Europäisches Patentamt

European Patent Office

Office européen des brevets

(11) Veröffentlichungsnummer: **0 340 693**
**A2**

(12) **EUROPÄISCHE PATENTANMELDUNG**

(21) Anmeldenummer: **89107834.7**

(22) Anmeldetag: **29.04.89**

(51) Int. Cl.⁴: **H04N 9/28**

(30) Priorität: **03.05.88 DE 3814986**

(43) Veröffentlichungstag der Anmeldung:
**08.11.89 Patentblatt 89/45**

(84) Benannte Vertragsstaaten:
**DE FR IT**

(71) Anmelder: **ROBERT BOSCH GMBH**
**Postfach 10 60 50**
**D-7000 Stuttgart 10(DE)**

(72) Erfinder: **Dohmann, Bernhard**
**Am Kohlenberg 2**
**D-3204 Nordstemmen 4(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Schaltungsanordnung und Verfahren zur Konvergenzkorrektur.**

(57) Bei einer Schaltungsanordnung zur Konvergenzkorrektur bei Farbbildröhren, wobei Korrekturwerte für einzelne Bildbereiche in einem der Farbbildröhre zugeordneten Speicher abgelegt sind und die Korrekturwerte beim Betrieb der Farbbildröhre synchron mit dem Schreiben des Rasters auslesbar sind, ist die Größe der Bildbereiche für die jeweilige Farbbildröhre festgelegt und im Speicher abgelegt. Außerdem kann vorgesehen sein, daß für einen mittleren Bereich des Rasters keine Korrekturwerte gespeichert sind.

a)

Fig. 1

$$b) \quad Gb = \frac{3(A - a)}{4 \times Sp}$$

$$c) \quad Sp = \frac{3(A - a)}{4 \times Gb}$$

EP 0 340 693 A2

## Schaltungsanordnung und Verfahren zur Konvergenzkorrektur

Die Erfindung geht aus von einer Schaltungsanordnung nach der Gattung des Hauptanspruchs.

Zur einwandfreien Bildwiedergabe ist es bei Farbbildröhren notwendig, daß die Elektronenstrahlen, welche durch Auftreffen auf entsprechende Leuchtstoffteilchen auf dem Schirm verschiedene Farben hervorrufen, über die gesamte Bildfläche jeweils in einem Punkt konvergieren. Ein Abweichen von dieser Bedingung bedeutet einen Verlust an Auflösung und Kontrast. Bei größeren Abweichungen werden Farbsäume sichtbar. Es ist bekannt, die Elektronenstrahlen zusätzlich zur Ablenkung durch weitere Magnetfelder zu beeinflussen, die durch horizontal- und vertikalfrequente Signale erzeugt werden. Mit dem dabei erzeugten Kurvenformen dieser Signale können jedoch nicht alle Abweichungen korrigiert werden.

Für erhöhte Ansprüche ist es daher bekanntgeworden, jeweils für einzele Bildbereiche Korrekturwerte zu speichern und diese synchron mit dem Schreiben des Rasters auszulesen und als Analogspannungen bzw. -ströme den dafür vorgesehenen Spulen zuzuführen. Damit kann eine sehr genaue Konvergenz erzielt werden, die selbst bei hochauflösenden Farbbildröhren, wie sie für Sichtgeräte von Computeranlagen verwendet werden, den Anforderungen genügt. Besonders kritisch sind in dieser Hinsicht Anwendungen für die computer-unterstützte Entwicklung und die computerunterstützte Fertigung, wobei häufig sehr detaillierte graphische Darstellungen von der Farbbildröhre wiederzugeben sind.

Aufgabe der vorliegenden Erfindung ist es, eine möglichst genaue Konvergenzkorrektur mit möglichst wenig technischem Aufwand zu ermöglichen.

Eine erfindungsgemäße Schaltungsanordnung mit den kennzeichnenden Merkmalen des Patentanspruchs 1 ermöglicht eine besonders günstige Ausnützung der Kapazität des für die Korrekturwerte vorgesehenen Speichers. Eine weitere erfindungsgemäße Schaltungsanordnung mit den Merkmalen des Patentanspruchs 2 ermöglicht ebenfalls eine günstige Ausnutzung der Kapazität des für die Korrekturwerte vorgesehenen Speichers, wobei die Erkenntnis ausgenutzt wird, daß in einem mittleren Bereich des Rasters keine Korrektur notwendig ist.

Zur Ermittlung der zu speichernden Korrekturwerte sind an sich Verfahren bekannt, die im Zusammenhang mit der vorliegenden Erfindung nicht näher erläutert werden müssen. Die Speicherung der somit ermittelten Korrekturwerte ist in vorteilhafter Weise nach erfindungsgemäßen Verfahren möglich. Dabei hat das erfindungsgemäße Verfahren nach Patentanspruch 10 den Vorteil, daß die zur Verfügung stehende Speicherkapazität unabhängig von der Qualität (Korrekturbedürftigkeit) der jeweiligen Farbbildröhre voll ausgenutzt wird. Dabei werden Farbbildröhren, die ohnehin schon recht genaue Konvergenzeigenschaften aufweisen, besser als Farbbildröhren mit größeren Konvergenzabweichungen.

Ein erfindungsgemäßes Verfahren gemäß Patentanspruch 11 zielt auf eine gleichbleibende Qualität hin, wobei je nach Korrekturbedürftigkeit der einzelnen Farbbildröhre der mittlere, unkorrigierte Bereich verschieden groß, gegebenenfalls auch gar nicht vorhanden sein kann.

Durch die in den Unteransprüchen aufgeführten Maßnahmen sind vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:

Fig. 1 die schematische Darstellung eines Rasters und dessen Einteilung in einzelne Bildbereiche,

Fig. 2 ein erstes erfindungsgemäßes Verfahren als Ablaufschema,

Fig. 3 ein zweites erfindungsgemäßes Verfahren ebenfalls als Ablaufschema und

Fig. 4 eine erfindungsgemäße Schaltungsanordnung, mit deren Hilfe in einem Farbsichtgerät die gespeicherten Konvergenzwerte aus dem Speicher ausgelesen und in Korrekturströme umgewandelt werden.

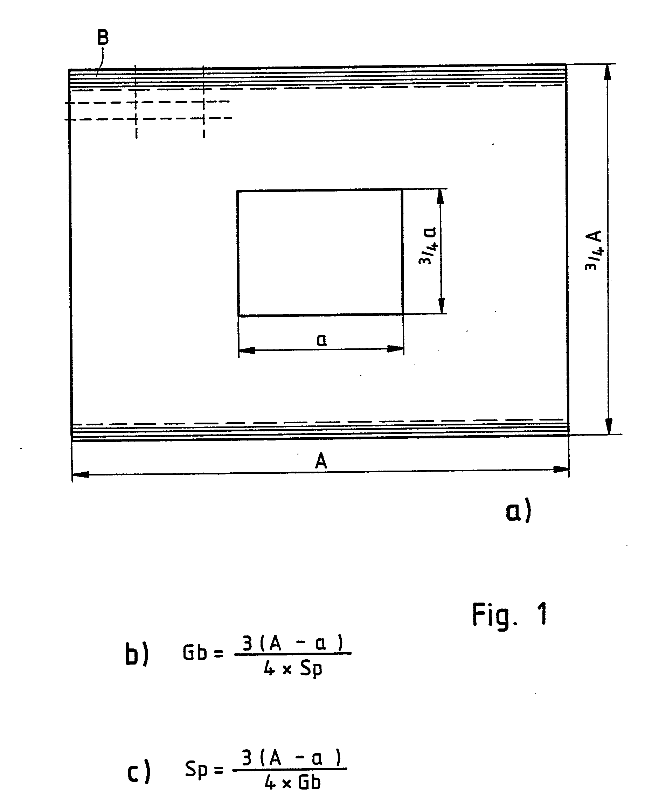

Bei der Darstellung gemäß Fig. 1a) sind Fernsehzeilen lediglich am oberen und unteren Rand des Rasters angedeutet. Die Breite des Rasters ist mit A bezeichnet, wahrend die Höhe entsprechend dem Normformat 3/4 A beträgt. Ein mittlerer Bereich, dessen Breite a und dessen Höhe 3/4 a beträgt, zeichnet sich dadurch aus, daß die Konvergenzfehler innerhalb der zulässigen Toleranz liegen, so daß eine Korrektur nicht erforderlich ist. Je nach vorgegebener Toleranz und je nach Eigenschaften der einzelnen Farbbildröhre kann dieser Bereich verschieden groß sein.

Die restliche Fläche des Rasters ist in Bildbereiche aufgeteilt, von denen in Fig. 1a) lediglich einige Bildbereiche B angedeutet sind. Die Bildbereiche umfassen in horizontaler Richtung einen Teil der Bildbreite, beispielsweise 1/8. In vertikaler Richtung können sich die Bildbereiche über mehrere Zeilen erstrecken, jedoch auch auf eine Zeile beschränkt sein. Für jeweils einen Bildbereich wird ein Satz Korrekturgrößen gespeichert.

Die Größe und damit die Anzahl der Bildbereiche hängt unter anderem von der Art der Farbbildröhre ab. So ist beispielsweise bei In-line-Röhren der Konvergenzfehler in vertikaler Richtung wesentlich kritischer als in horizontaler Richtung. Es wurden daher bei einer praktisch erprobten Schaltungsanordnung in horizontaler Richtung acht und in vertikaler Richtung 205 Bildbereiche vorgesehen.

Bei einer Ausführungsform der Erfindung wird der mittlere Bereich derart vorgegeben, daß der größte Teil der hergestellten Röhren innerhalb des mittleren Bereichs genügend kleine Konvergenzfehler aufweisen. Beim späteren Betrieb der Farbbildröhre ist dann der nicht zu korrigierende mittlere Bereich ebenfalls fest vorgegeben.

Es kann jedoch auch gemäß einer anderen Ausführungsform der Erfindung bei jeder individuellen Röhre ein mittlerer Bereich festgelegt werden, der gerade so groß ist, daß die in diesem Bereich auftretenden Fehler noch innerhalb der Toleranz liegen. Die Größe bzw. die Grenzen dieses mittleren Bereichs werden dann zusammen mit den Korrekturwerten gespeichert und beim späteren Betrieb der Farbbildröhre abgerufen. Dadurch kann bei Farbbildröhren, bei welchen der innerhalb der Toleranz liegende mittlere Bereich relativ groß ist, der zu korrigierende Bildbereich relativ fein aufgeteilt werden. Dadurch wird bei gegebenen Speicherplatz eine genauere Korrektur dieser Farbbildröhren möglich.

Zur weiteren Erläuterung dieser Zusammenhänge wird auf die in Fig. 1b) dargestellte Gleichung verwiesen. Dabei bedeutet Sp der für die Korrekturwerte benötigte Speicherplatz bzw. die Anzahl der zu korrigierenden Bildbereiche, wobei dann für einen Bildbereich Gb eine vorgegebene Anzahl von Bits, vorzugsweise ein Byte pro Korrekturstrom, erforderlich ist. Aus der in Fig. 1b) dargestellten Gleichung ergibt sich, daß mit größer werdendem inneren Bereich (a) die Größe des Bereichs Gb abnimmt, was wiederum eine feinere an den tatsächlichen Verlauf der Konvergenzfehler besser angepaßte Einteilung der Korrekturwerte ermöglicht.

Fig. 1c) stellt eine gegenüber Fig. 1b) umgeformte Gleichung dar, wobei davon ausgegangen wird, daß die Bereichsgröße Gb entsprechend der Anfangsqualität der Farbbildröhre vorgegeben wird. Ist diese schlecht, so wird zur Erzielung eines gleichen Qualitätsstandards mehr Speicherplatz benötigt, als bei einer guten Anfangsqualität, was zur Folge hat, daß der mittlere Bereich größer wird.

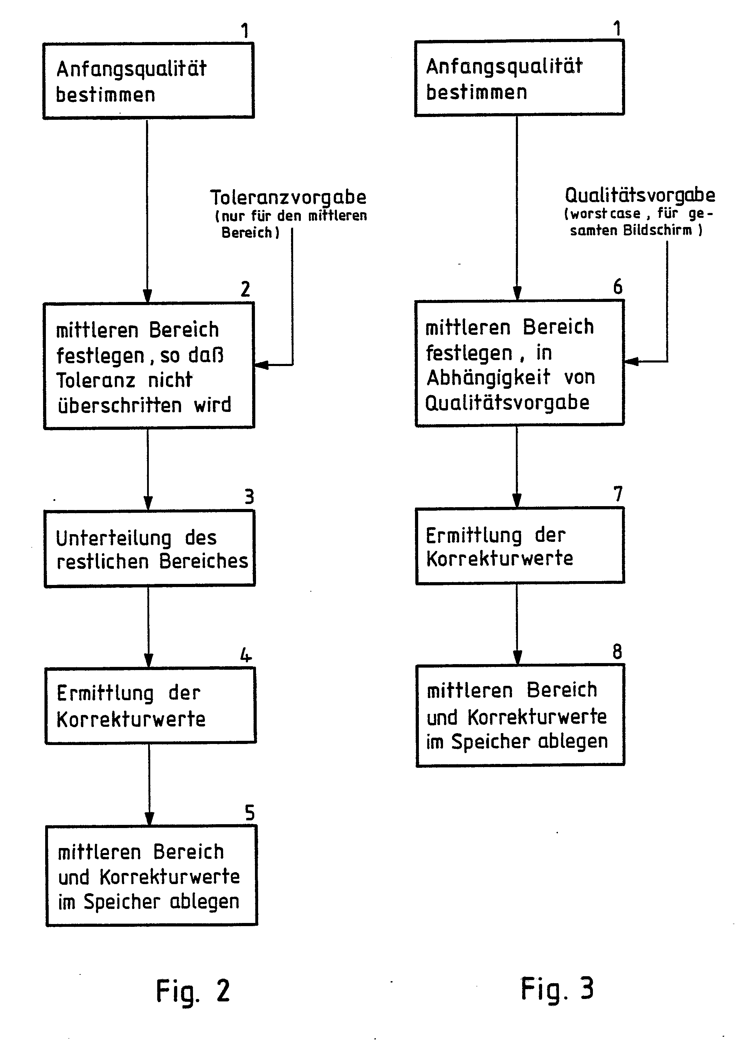

Das im Zusammenhang mit Fig. 1b) erwähnte Verfahren wird im folgenden anhand des Ablaufplanes gemäß Fig. 2 erläutert. Zunächst wird bei 1 die Anfangsqualität der Farbbildröhre bestimmt, das heißt die Qualität der Farbbildröhre nach ihrer Herstellung. Bei 2 wird die Größe des mittleren Bereichs in Abhängigkeit von der Toleranzvorgabe für diesen mittleren Bereich festgelegt.

Im Anschluß daran wird bei 3 der von dem mittleren Bereich nicht umfaßte Teil des Rasters in eine vorgegebene Anzahl von Bildbereiche unterteilt, für die dann bei 4 in an sich bekannter Weise Korrekturwerte ermittelt werden. Im Verfahrensschritt 5 werden die Größe bzw. die Grenzen des mittleren Bereichs der Bildbereiche und die Korrekturwerte in einem der individuellen Farbbildröhre zugeordneten Speicher abgelegt.

Das Ergebnis dieses Verfahrens sind Farbbildröhren mit einer von der Anfangsqualität abhängigen Qualität. Dabei weisen diejenigen Farbbildröhren, deren Anfangsqualität bereits sehr hoch ist, eine besonders gute Konvergenz auf und können für besonders kritische Anwendungen ausgewählt werden.

Bei dem in Fig. 3 dargestellten Verfahren wird ebenfalls bei 1 die Anfangsqualität der Farbbildröhre bestimmt. In dem darauffolgenden Verfahrensschritt 6 wird die Größe des mittleren Bereichs hinsichtlich einer Qualitätsvorgabe für die gesamte Röhre festgelegt. Die dafür benötigte Anzahl an Bildbereichen (Auflösung) und die daraus resultierende Größe des mittleren Bereichs muß bestimmt werden. Für die außerhalb des mittleren Bereichs liegenden Bildbereiche werden bei 7 die Korrekturwerte ermittelt und bei 8 zusammen mit den Informationen zum mittleren Bereich im Speicher abgelegt. Das Ergebnis dieses Verfahrens sind Farbbildröhren mit konstanter Qualität, wobei der mittlere Bereich je nach dem zur Verfügung stehenden Speicherplatz groß, klein oder nicht vorhanden sein kann.

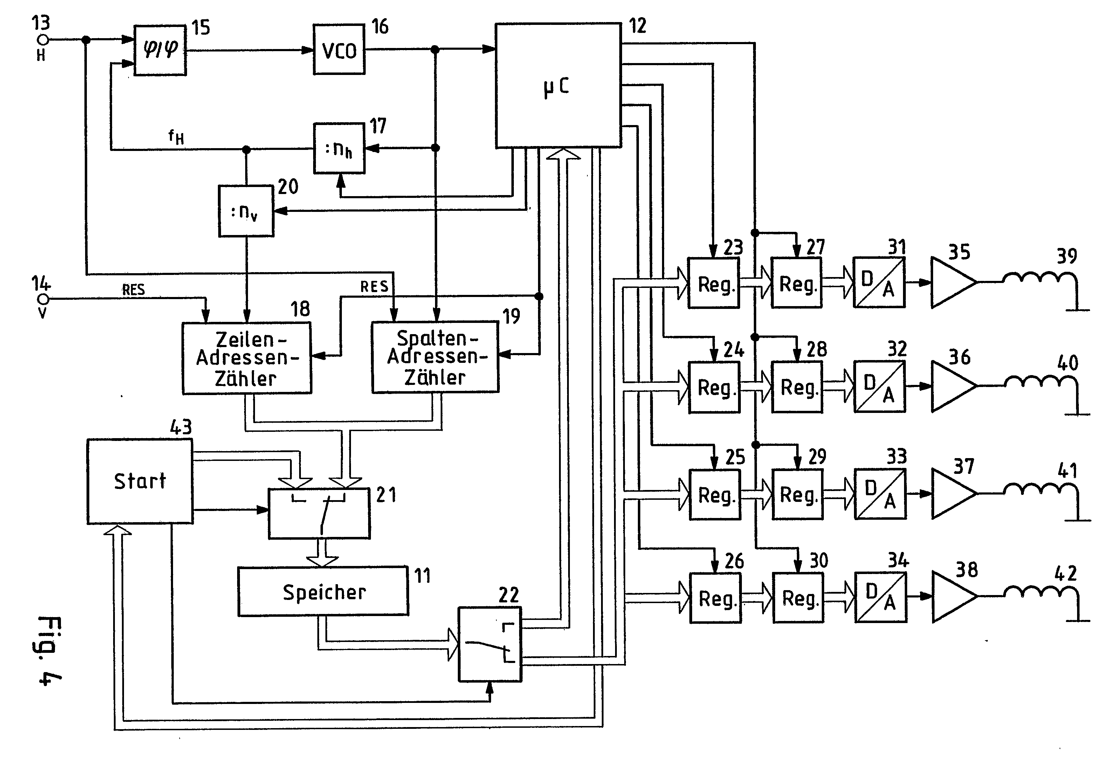

Zur Durchführung des erfindungsgemäßen Verfahrens stehen dem Fachmann verschiedene Möglichkeiten zur Speicherung des mittleren Bereichs und der Korrekturwerte zur Verfügung. Als geeignete Speicher kommen programmierbare Nur-Lese-Speicher (PROMs) gegebenenfalls in Formen in Frage, bei denen die Information elektrisch löschbar ist (EEPROMS). Bei der Speicherung des mittleren Bereichs kann es vorteilhaft sein, die Grenzen des Bereichs bzw. die Koordinaten der Grenzen abzulegen. In diesem Fall kann eine relativ einfache Auswertung, wie sie im Zusammenhang mit Fig. 4 dargestellt ist, erfolgen. Es kann jedoch anstelle der Grenzen auch eine Angabe der Seitenlängen bzw. des Formats abgespeichert werden oder auch nur eine Größenangabe der Fläche, wenn man ein konstantes Seitenverhältnis und eine konstante Lage voraussetzt.

Die in Fig. 4 dargestellte Schaltungsanordnung ist Teil eines Farbmonitors bzw. Farbempfängers und umfaßt einen Speicher 11, der mit der Festlegung der Korrekturwerte nach den im Zusammenhang mit Fig. 1 und 2 beschriebenen Verfahren einer in Fig. 4 nicht dargestellten Farbbildröhre zugeordnet ist. Die Steuerung des Auslesens der Informationen aus dem Speicher wird von einem Mikrocomputer 12 übernommen. Eingängen 13, 14 werden die horizontal- und vertikal-frequenten Synchronimpulse H und V zugeführt. Aus dem Impuls H wird mit einer PLL-Schaltung ein Signal fo abgeleitet, dessen Frequenz einem ganzzahligen Vielfachen der Zeilenfrequenz entspricht. Im einzelnen besteht die PLL-Schaltung aus einer Phasenvergleichsschaltung 15 und einem steuerbaren Oszillator 16, dessen Ausgangsspannung über einen programmierbaren Frequenzteiler 17 zur Phasenvergleichsschal tung zurückgeführt wird. Der programmierbare Frequenzteiler 17 ist vom Mikrocomputer 12 steuerbar und bestimmt die in horizontaler Richtung vorgesehene Anzahl $n_h$ von Bildbereichen.

Zur Gewinnung von Adressen zum Auslesen der Informationen aus dem Speicher 11 sind Zeilenadressenzähler 18 und Spaltenadressenzähler 19 vorgesehen.

Der Zeilenadressenzähler 18 wird vom V-Impuls zurückgesetzt und erhält Zählimpulse von einem weiteren programmierbaren Frequenzteiler 20. Der Divisor $h_v$ ist vom Mikrocomputer 12 steuerbar und bestimmt die Anzahl bzw. Größe der in vertikaler Richtung vorgesehenen Bildbereiche.

Der Spaltenadressenzähler 19 wird vom Impuls H zurückgesetzt und zählt Impulse des Signals fo. Damit wird der Spaltenadressenzähler vom linken Rasterrand beginnend, für jeden Bildbereich um eins inkrementiert. Die Ausgangssignale beider Zähler 18, 19 bilden zusammen die Adresse, unter der der jeweilige Korrekturwert abgelegt ist.

Über einen Umschalter 21 wird diese Adresse dem Speicher 11 zugeführt. Die unter der jeweiligen Adresse abgelegten Korrekturwerte werden über einen weiteren Umschalter 22 einer Schaltung zur Erzeugung der Korrekturströme zugeleitet. Da für jeden Bildbereich vier verschiedene Korrekturströme zu erzeugen sind und dementsprechend auch vier verschiedene zusammengehörende Korrekturwerte nacheinander aus dem Speicher 11 ausgelesen werden, sind vier Register 23, 24, 25, 26 vorgesehen, welche vom Mikrocomputer 12 mit einem Vierphasentakt angesteuert werden. In wei tere Register 27 bis 30 wird der Inhalt der Register 23 bis 26 im Arbeitstakt des Mikrocomputers 12 übernommen. An den Ausgängen der Register 27 bis 30 stehen dann die Korrekturwerte zur Verfügung, die über Digital/Analog-Wandler 31 bis 34, Verstärker 35 bis 38 in Korrekturströme umgewandelt und Korrekturspulen 39 bis 42 zugeführt werden.

Bei der Inbetriebnahme der Schaltung wird von einer Start-Schaltung (Start-up) 43 eine Adresse ausgegeben, unter welcher die den mittleren Bereich betreffenden Daten abgelegt sind. Außerdem werden von der Start-Schaltung 43 die Umschalter 21 und 22 kurzzeitig in die nicht dargestellte Stellung gebracht. Dadurch gelangt die von der Start-Schaltung 43 abgegebene Adresse zum Speicher 11, worauf die den mittleren Bereich betreffenden Informationen ausgelesen und über den Umschalter 42 dem Mikrocomputer 12 zugeführt werden. Entsprechend den Grenzen des mittleren Bereichs wird vom Mikrocomputer 12 die programmierbaren Teiler 17, 20 eingestellt, wodurch die Größe der einzelnen Bildbereiche entsprechend der Festlegung beim Ermitteln der Korrekturwerte (Fig. 2) berücksichtigt wird. Außerdem gibt der Mikrocomputer 12 Signale an den Zeilenadressenzähler 18 und an den Spaltenadressenzähler 19 ab, welche bewirken, daß die Zähler angehalten werden, wenn auf dem Schirm der Farbbildröhre der mittlere Bereich geschrieben wird.

## Ansprüche

1. Schaltungsanordnung zur Konvergenzkorrektur bei Farbbildröhren, wobei Korrekturwerte für einzelne Bildbereiche in einem der Farbbildröhre zugeordneten Speicher abgelegt sind und die Korrekturwerte beim Betrieb der Farbbildröhre synchron mit dem Schreiben des Rasters auslesbar sind, dadurch gekennzeichnet, daß die Größe der Bildbereiche für die jeweilige Farbbildröhre festgelegt und im Speicher (11) abgelegt ist.

2. Schaltungsanordnung zur Konvergenzkorrektur bei Farbbildröhren, wobei Korrekturwerte für einzelne Bildbereiche in einem der Farbbildröhre zugeordneten Speicher abgelegt sind und die Korrekturwerte beim Betrieb der Farbbildröhre synchron mit dem Schreiben des Rasters auslesbar sind, dadurch gekennzeichnet, daß für einen mittleren Bereich des Rasters keine Korrekturwerte gespeichert sind.

3. Schaltungsanordnung nach Anspruch 2, dadurch gekennzeichnet, daß in dem Speicher (11) zusätzlich für die jeweilige Farbbildröhre die Größe des mittleren Bereichs gespeichert ist.

4. Schaltungsanordnung nach einem der Ansprüche 1 bis 3, dadurch gekennzeichnet, daß die Größe der Bildbereiche in Abhängigkeit vom örtlichen Verlauf und von der Große der Konvergenzfehler der Farbbildröhre festgelegt ist.

5. Schaltungsanordnung nach einem der vorhergehenden Ansprüche, dadurch gekennzeichnet, daß dem Speicher (11) zwei Adressenzähler (18, 19) zugeordnet sind, daß der erste Adressenzähler (18) von Impulsen, deren Frequenz der Zeilenfrequenz oder einem ganzzahligen Teil der Zeilenfrequenz entspricht, getaktet und von bildfrequenten Impulsen rückgesetzt wird,

daß der zweite Adressenzähler (19) von Impulsen, deren Frequenz ein Vielfaches der Zeilenfrequenz beträgt, getaktet und von zeilenfrequenten Impulsen rückgesetzt wird und

daß Datenausgänge des Speichers (11) über Register (23 bis 30), Digital/Analog-Wandler (31 bis 34) und Verstärker (35 bis 38) mit Konvergenzspulen (39 bis 42) verbindbar sind.

6. Schaltungsanordnung nach Anspruch 5, dadurch gekennzeichnet,

daß zur Erzeugung der Impulse, deren Frequenz ein Vielfaches der Zeilenfrequenz beträgt, eine Phasenregelschleife (PLL) vorgesehen ist mit einem program mierbaren Frequenzteiler (17).

7. Schaltungsanordnung nach Anspruch 6, dadurch gekennzeichnet,

daß die Adressenzähler (18, 19) von einer Steuerschaltung (12), insbesondere einem Mikrocomputer, sperrbar sind.

8. Schaltungsanordnung nach Anspruch 5, dadurch gekennzeichnet,

daß eine Start-Schaltung (43) vorgesehen ist, die beim Einschalten dem Speicher (11) Adressen zuführt, unter der die Größen des mittleren Bereichs und der Bildbereiche abgelegt sind und die Datenausgänge mit Eingängen einer Steuerschaltung (12), insbesondere eines Mikrocomputers, verbindet.

9. Schaltungsanordnung nach Anspruch 8, dadurch gekennzeichnet,

daß die Steuerschaltung (12) die Adressenzähler (18, 9) während des Schreibens des mittleren Bereichs sperrt und die programmierbaren Frequenzteiler (17, 20) in Abhängigkeit von den nach dem Einschalten aus dem Speicher (11) gelesenen Daten programmiert.

10. Verfahren zur Konvergenzkorrektur bei Farbbildröhren, wobei Korrekturwerte für einzelne Bildbereiche in einem der Farbbildröhre zugeordneten Speicher abgelegt werden, die beim späteren Betrieb der Farbbildröhre synchron mit dem Schreiben des Rasters ausgelesen werden, dadurch gekennzeichnet, daß die Größe eines mittleren Bereichs, für welche keine Korrekturwerte gespeichert werden, derart festgelegt wird, daß die im mittleren Bereich auftretenden Konvergenzfehler innerhalb einer vorgegebenen Toleranz liegen,

daß der restliche Teil des Rasters in Bildbereiche aufgeteilt wird, wobei die Anzahl der Bildbereiche der Anzahl der für Korrekturwerte zur Verfügung stehenden Speicherplätze entspricht, und

daß ferner die Größe des mittleren Bereichs gespeichert wird.

11. Verfahren zur Konvergenzkorrektur bei Farbbildröhren, wobei Korrekturwerte für einzelne Bildbereiche in einem der Farbbildröhre zugeordneten Speicher abgelegt werden, die beim späteren Betrieb der Farbbildröhre synchron mit dem Schreiben des Rasters ausgelesen werden, dadurch gekennzeichnet, daß die Größe eines mittleren Bereichs, für welche keine Korrekturwerte gespeichert werden, derart festgelegt wird, daß die im mittleren Bereich auftretenden Konvergenzfehler innerhalb einer vorgegebenen Toleranz liegen, und

daß der restliche Teil des Rasters in Bildbereiche vorgegebener Größe aufgeteilt wird, so daß die vorgegebene Toleranz für den Rest des gesamten Rasters durch Korrektur erfüllt werden kann.

R.- Nr. 2000

a)

Fig. 1

b)  $Gb = \dfrac{3(A - a)}{4 \times Sp}$

c)  $Sp = \dfrac{3(A - a)}{4 \times Gb}$

R.-Nr. 2000

**Fig. 2**

```
┌─────────────────────┐ 1
│ Anfangsqualität     │
│ bestimmen           │
└─────────────────────┘
          │
          ▼
┌─────────────────────┐ 2      Toleranzvorgabe
│ mittleren Bereich   │       (nur für den mittleren
│ festlegen, so daß   │◄──          Bereich)
│ Toleranz nicht      │
│ überschritten wird  │
└─────────────────────┘
          │
          ▼
┌─────────────────────┐ 3
│ Unterteilung des    │
│ restlichen Bereiches│
└─────────────────────┘
          │
          ▼
┌─────────────────────┐ 4
│ Ermittlung der      │
│ Korrekturwerte      │
└─────────────────────┘
          │
          ▼
┌─────────────────────┐ 5
│ mittleren Bereich   │
│ und Korrekturwerte  │
│ im Speicher ablegen │
└─────────────────────┘
```

**Fig. 3**

```
┌─────────────────────┐ 1
│ Anfangsqualität     │
│ bestimmen           │
└─────────────────────┘
          │
          ▼
┌─────────────────────┐ 6      Qualitätsvorgabe
│ mittleren Bereich   │       (worst case, für ge-
│ festlegen, in       │◄──      samten Bildschirm)
│ Abhängigkeit von    │
│ Qualitätsvorgabe    │
└─────────────────────┘
          │
          ▼
┌─────────────────────┐ 7
│ Ermittlung der      │
│ Korrekturwerte      │
└─────────────────────┘
          │
          ▼
┌─────────────────────┐ 8
│ mittleren Bereich   │
│ und Korrekturwerte  │
│ im Speicher ablegen │
└─────────────────────┘
```

EP 0 340 693 A2

13
H

15 $\varphi/\varphi$

16 VCO

12 µC

$f_H$

17 :$n_h$

20 :$n_v$

14
V

RES

RES

18 Zeilen-Adressen-Zähler

19 Spalten-Adressen-Zähler

43 Start

21

11 Speicher

22

23 Reg.

27 Reg.

31 D/A

35

39

24 Reg.

28 Reg.

32 D/A

36

40

25 Reg.

29 Reg.

33 D/A

37

41

26 Reg.

30 Reg.

34 D/A

38

42

Fig. 4